# EUROPEAN PATENT APPLICATION

(11) **EP 3 287 224 A2**
(43) Date of publication of application: **28.02.2018**
(21) Application number: 17185057.1
(22) Date of filing: 07.08.2017
(51) Int. Cl.: B23H 11/00, B23H 1/02, B23H 7/20

(54) **ELECTRICAL DISCHARGE MACHINE**

(30) Priority: 08.08.2016 JP 2016155392
(71) Applicant: FANUC CORPORATION, Oshino-mura Minamitsuru-gun Yamanashi 401-0597 (JP)
(72) Inventor: Masuda, Masashi, Oshino-mura, Minamitsuru-gun, Yamanashi 401-0597 (JP); Kawahara, Akiyoshi, Oshino-mura, Minamitsuru-gun, Yamanashi 401-0597 (JP); Nakashima, Yasuo, Oshino-mura, Minamitsuru-gun, Yamanashi 401-0597 (JP); Furuta, Tomoyuki, Oshino-mura, Minamitsuru-gun, Yamanashi 401-0597 (JP)
(74) Representative: Thum, Bernhard

(57) **Abstract**

An electrical discharge machine (10) includes: a work tank (42) to store the working fluid (LQ) in order to perform electrical discharge machining; a sound collector (52) to collect sound generated by electrical discharge machining and transmitted through the working fluid (LQ) stored in the work tank (42); and a controller (18) to perform a predetermined operation based on sound information collected by the sound collector (52).

## Description

### BACKGROUND OF THE INVENTION

### Field of the Invention:

The present invention relates to an electrical discharge machine that performs electrical discharge machining by applying voltage across an electrode gap formed between an electrode and a workpiece to make current flow.

### Description of the Related Art:

Wire electrical discharge machining has been widely used as a machining method capable of machining metal with high precision. Because wire discharge machining is highly accurate, it is affected by a change in the surrounding environment or a failure of the equipment, which may make the machined workpiece defective. To deal with this, methods for detecting a failure or an abnormality of the wire electrical discharge machine have been devised.

International Publication No. WO2013/157071 discloses a wire electrical discharge machine that detects a physical quantity representing the state of a wire electrical discharge machine and displays the detected physical quantity with a normal range of the physical quantity in accordance with the machining condition. This configuration makes possible for the operator to judge whether or not the state of the wire electrical discharge machine is normal.

### SUMMARY OF THE INVENTION

With the configuration disclosed in International Publication No. WO2013/157071, the operator has to grasp the current state of the wire electrical discharge machine while watching the information displayed and manually stop the wire electrical discharge machining if the current state is determined to be abnormal. On the other hand, it is a usual practice to cut out cores in the wire electrical discharge machine. In performing cutting of cores, the operator has to stop electrical discharge machining at suitable timing by monitoring the discharge sound and/or change in processing state. In this way, the operator must monitor the state and perform some operations, resulting in poor production efficiency.

It is therefore an object of the present invention to provide an electrical discharge machine which automatically performs predetermined operations without the need of operator's monitoring and operations.

An aspect of the invention resides in an electrical discharge machine that performs electrical discharge machining on a workpiece by applying voltage between an electrode gap formed between an electrode and the workpiece to generate electric discharge in a working fluid, including: a work tank configured to store the working fluid in order to perform electrical discharge machining; a sound collector configured to collect sound generated by electrical discharge machining and transmitted through the working fluid stored in the work tank; and a controller configured to perform a predetermined operation based on sound information collected by the sound collector.

With this configuration, since the sound generated by electrical discharge machining is collected via the working fluid, it is possible to correctly grasp the state of the electrical discharge machine and automatically perform a suitable operation in conformity with the state of the electrical discharge machine.

According to an aspect of the invention, the above electrical discharge machine may be configured such that the sound collector is arranged inside the work tank, and a space forming portion configured to define a space accommodating the sound collector is further provided inside the work tank so as to be in contact with the working fluid stored in the work tank. In this way, the space forming portion for defining the space accommodating the sound collector is in contact with the working liquid, so that the sound collector can efficiently collect the sound generated by electrical discharge machining.

According to an aspect of the invention, in the above electrical discharge machine, the space forming portion may be formed of conductive material. This makes it possible to reduce the influence on the sound information from the discharge noise arising from electrical discharge machining, hence improve the S/N ratio of the sound information.

According to an aspect of the invention, the above electrical discharge machine may be configured such that the space forming portion is configured to protect against the working fluid stored in the work tank so that the fluid does not enter the space, and the sound collector is arranged adjacent to an outer wall of the space forming portion that is in contact with the working fluid. This configuration does not need to make the sound collector waterproof, which leads to reduction in cost and enables the sound collector to collect the sound generated by electrical discharge machining in a more efficient manner.

According to an aspect of the invention, in the above electrical discharge machine, the space forming portion may be formed of mesh so as to introduce the working fluid stored in the work tank into the space. This configuration enables the sound collector to collect the sound generated by electrical discharge machining, directly via the working fluid, in a more exact and efficient manner.

According to an aspect of the invention, in the above electrical discharge machine, the sound collector may be arranged outside an outer wall of the work tank and adjacent thereto. This arrangement enables the sound collector to collect the sound generated by electrical discharge machining in a more efficient manner.

According to an aspect of the invention, in the above electrical discharge machine, the outer wall around which the sound collector is arranged adjacently may be formed with a sound permeable material that is capable of transmitting sound. This makes it possible to collect the sound generated by electrical discharge machining in a more efficient manner.

According to an aspect of the invention, the above electrical discharge machine may be configured such that the controller includes a storage medium that has stored predetermined reference sound information, and the controller is configured to compare the sound information collected by the sound collector with the reference sound information stored in the storage medium, and based on a comparison result, perform at least one of operations including warning, stoppage of electrical discharge machining and change of machining condition. Thus, use of the reference sound information stored in the storage medium enables more exact grasp of the current state of the electrical discharge machine, whereby it is possible to automatically perform a suitable operation in conformity with the current state.

According to an aspect of the invention, the above electrical discharge machine may be configured such that the controller includes a storage medium that has stored range information indicating a predetermined range of sound information, and the controller is configured to determine whether or not the sound information collected by the sound collector falls within the range indicated by the range information stored in the storage medium, and based on a determination result, perform at least one of operations including warning, stoppage of electrical discharge machining and change of machining condition. Thereby, use of the range information stored in the storage medium enables more exact grasp of the current state of the electrical discharge machine, whereby it is possible to automatically perform a suitable operation in conformity with the current state.

According to an aspect of the invention, the above electrical discharge machine may be configured such that the reference sound information or the range information corresponding to a failure component has been stored in the storage medium, and the controller is configured to detect a component that has failed based on the sound information collected by the sound collector and the reference sound information or the range information, and when a failure of a component is detected, the controller is configured to at least give warning that the detected component has the failure. Thereby, it is possible to accurately detect a failure part in the electrical discharge machine and automatically perform a suitable operation (warning to the operator) accordingly.

According to an aspect of the invention, the above electrical discharge machine may be configured such that the reference sound information or the range information corresponding to completion of a core cutting process has been stored in the storage medium, and the controller is configured to determine whether or not a core cutting process has been completed based on the sound information collected by the sound collector and the reference sound information or the range information, and, when the core-cutting is completed, the controller is configured to at least stop electrical discharge machining. As a result, it is possible to accurately detect whether the core cutting-out process has been completed, and automatically perform an appropriate operation (stoppage of electric discharge machining) accordingly.

According to an aspect of the invention, the above electrical discharge machine may be configured such that the reference sound information or the range information corresponding to chattering has been stored in the storage medium, and the controller is configured to determine whether or not chatter occurs based on the sound information collected by the sound collector and the reference sound information or the range information, and, when chatter occurs, the controller is configured to at least perform stoppage of electrical discharge machining or change of machining condition. With this, it is possible to accurately detect occurrence of chattering and automatically perform a suitable operation (stoppage of electrical discharge machining or change of machining condition) accordingly.

According to an aspect of the invention, the sound information may include information representing at least one of loudness, sound pitch, tone and frequency of the sound.

According to the present invention, since the sound collector collects sound generated by electrical discharge machining via the working fluid, it is possible to grasp the state of the electrical discharge machine exactly, whereby it is possible to automatically perform a suitable operation in conformity with the state thereof.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

- FIG. 1: is a schematic mechanical configuration diagram of a wire electrical discharge machine as one type of electrical discharge machine of the embodiment;
- FIG. 2: is a schematic electrical configuration diagram of the wire electrical discharge machine shown in FIG. 1;
- FIG. 3: is an illustrative diagram for explaining the arrangement of a sound collector shown in FIG. 2;
- FIG. 4: is a block diagram showing a controller shown in FIG. 1;
- FIG. 5: is a flowchart showing the operation control of the controller shown in FIG. 4;
- FIG. 6: is an illustrative diagram for explaining the arrangement of a sound collector in a variational example 1; and,
- FIG. 7: is an illustrative diagram for explaining the arrangement of the sound collector in a variational example 2.

### DESCRIPTION OF THE PREFERRED EMBODIMENTS

The electrical discharge machines according to the present invention will be described in detail hereinbelow with reference to the accompanying drawings, by giving preferred embodiments thereof. The embodiment will be described by giving an example of a wire electrical discharge machine, which is one type of electrical discharge machine, but the present invention may be applied to any electrical discharge machine without use of a wire electrode.

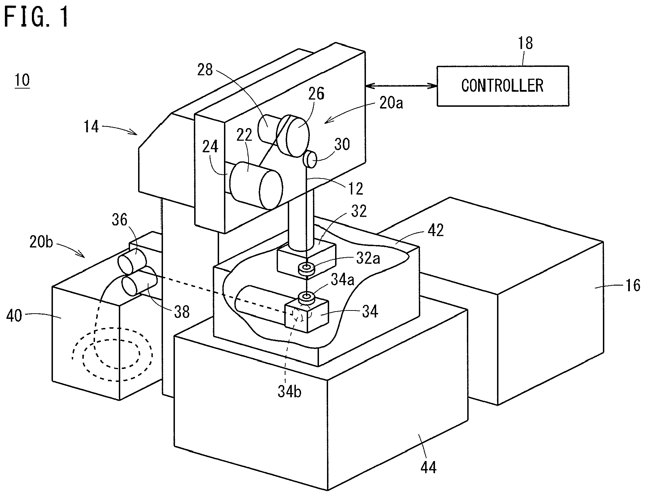

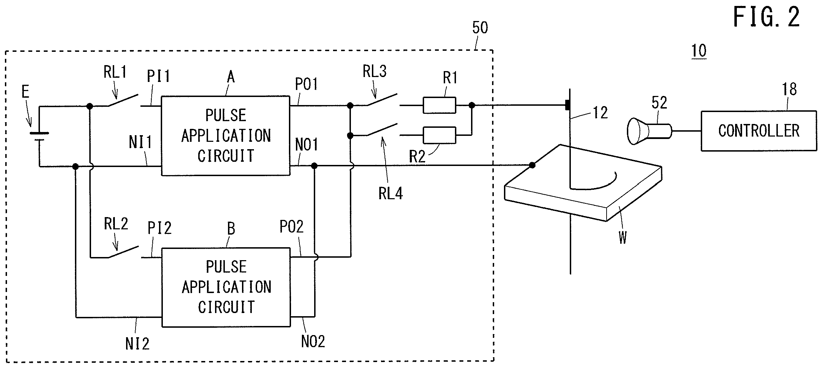

FIG. 1 is a schematic mechanical configuration diagram of a wire electrical discharge machine (electrical discharge machine) 10. The wire electrical discharge machine 10 is a machine tool that effects electrical discharge machining on an object to be machined (workpiece) W, by applying voltage across an electrode gap (clearance) formed between a wire electrode 12 and the workpiece W (see FIG. 2) to generate electric discharge in a working fluid. The wire electrical discharge machine 10 includes a main machine body 14, a working fluid processor (dielectric fluid unit) 16 and a controller 18.

The wire electrode 12 is formed of, for example, metal material such as tungsten-based, copper-alloy based and brass-based material. On the other hand, the material of the workpiece W is, for example, iron-based material or superhard material such as tungsten carbide.

The main machine body 14 includes a supply system 20a for supplying the wire electrode 12 toward the workpiece W and a collection system 20b for collecting the wire electrode 12 having passed through the workpiece W.

The supply system 20a includes a wire bobbin 22 with the wire electrode 12 wound thereon, a torque motor 24 for applying a torque to the wire bobbin 22, a brake shoe 26 for applying a braking force by friction to the wire electrode 12, a braking motor 28 for applying a braking torque to the brake shoe 26, a tension detector 30 for detecting the tension of the wire electrode 12 and an upper wire guide 32 for guiding the wire electrode 12.

The collection system 20b includes a lower wire guide 34 for guiding the wire electrode 12, a pinch roller 36 and a feed roller 38 capable of gripping the wire electrode 12 and a wire collection box 40 for collecting the wire electrode 12 transferred by the pinch roller 36 and the feed roller 38.

The main machine body 14 includes a work tank (work-pan) 42 capable of storing a dielectric working fluid such as deionized water or oil used in electrical discharge machining with the upper wire guide 32 and the lower wire guide 34 arranged therein. The work tank 42 is mounted on a base 44. The workpiece W is placed between the upper wire guide 32 and the lower wire guide 34. The upper wire guide 32 and the lower wire guide 34 respectively have die guides 32a and 34a for supporting the wire electrode 12. The lower wire guide 34 includes a guide roller 34b that guides the wire electrode 12 to the pinch roller 36 and the feed roller 38 by deflecting the travel of the wire electrode 12.

The upper wire guide 32 ejects a clean working fluid not containing sludge (machined swarf). This function makes it possible to fill the clearance (electrode gap) between the wire electrode 12 and the workpiece W with a clean working fluid suitable for electrical discharge machining, and also prevent the accuracy of electrical discharge machining from being deteriorated by sludge arising during electrical discharge machining. Also, the lower wire guide 34 may also jet a clean working liquid not containing sludge.

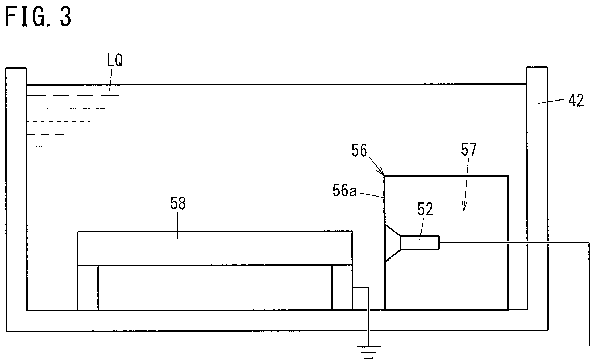

The workpiece W is supported by a table 58, and the table 58 is arranged in the work tank 42 (see FIG. 3). The upper wire guide 32, the lower wire guide 34, the table 58 and the workpiece W are immersed in the working fluid LQ stored in the work tank 42.

While the main machine body 14 (wire electrical discharge machine 10) moves the position of the table 58 and the position of the wire electrode 12 stretched by the die guides 32a and 34a relative to each other to machine the workpiece W.

The working fluid processor 16 is a device that removes machined swarf (sludge) produced in the work tank 42 and manages the quality of the working fluid by adjusting the electric resistivity and temperature and the like. The working fluid that has been adjusted in quality by this working fluid processor 16 is returned to the work tank 42 again. The controller 18 controls the main machine body 14 and the working fluid processor 16.

FIG. 2 is a schematic electrical configuration diagram of the wire electrical discharge machine 10. The wire electrical discharge machine 10 further includes a machining power supply 50 and a sound collector 52. The machining power supply 50 includes a power source E, two pulse application circuits A and B, four relay switches RL1 to RL4 and two resistors R1 and R2. The power source E is a DC power supply. The positive electrode (+ electrode) of the power source E is connected to a positive side input terminal PI1 of the pulse application circuit (first pulse application circuit) A via the relay switch RL1 as well as to a positive side input terminal PI2 of the pulse application circuit (second pulse application circuit) B via the relay switch RL2.

The negative electrode (- electrode) of the power source E is connected to negative side input terminals NI1 and NI2 of the pulse application circuit A and the pulse application circuit B. That is, the relay switches RL1 and RL2 are relay switches to select either the pulse application circuit A or B as the pulse application circuit for applying voltage (pulse voltage) across the electrode gap. Therefore, only one of the relay switches (first and second relay switches) RL1 and RL2 is turned on, and both of them will not be turned on at the same time.

The positive side output terminals PO1 and PO2 of the pulse application circuits A and B are connected to the wire electrode 12 via a relay switch RL3 and a first resistor R1, and also connected to the wire electrode 12 via a relay switch RL4 and a second resistor R2. That is, the relay switch RL3 and resistor R1, and the relay switch RL4 and resistor R2 are connected in parallel.

The negative side output terminals NO1 and NO2 of the pulse application circuit A and the pulse application circuit B are connected to the workpiece W. That is, the relay switches RL3 and RL4 are relay switches for selecting the use of the resistors R1 and R2 in order to apply voltage across electrode gap. Accordingly, only one of the relay switch (third relay switch) RL3 and the relay switch (fourth relay switch) RL4 is turned on, or both are on.

The pulse application circuits A and B generate pulse voltage based on the voltage from the power source E, apply the generated pulse voltage between the electrodes to flow pulse current. That is, a pulse voltage and a pulse current are applied across the electrode gap by the pulse application circuit A or B. The pulse application circuits A and B generate pulse voltages (pulse currents) of different frequencies. Therefore, the energy per pulse of the pulse voltage (pulse current) generated by the pulse application circuit A can be made different from that generated by the pulse application circuit B. The frequencies of the pulse voltages (pulse currents) generated by the pulse application circuits A and B are controlled by the controller 18.

The machining power supply 50 can take multiple different circuit forms by use of relay switches RL1 to RL4. That is, by switching the electrical connections of the relay switches RL1 to RL4, a plurality of circuit states can be formed so that the machining power supply 50 can be set to any one of the multiple circuit modes. The relay switches RL1 to RL4 are switched on and off under the control of the controller 18.

The sound collector 52 collects sound given off during electrical discharge machining effected in the working fluid. The sound collector 52 collects the sound transmitted through the working fluid stored in the work tank 42. That is, the sound generated by the electrical discharge machining performed in the working fluid is transmitted through the working fluid stored in the work tank 42 to the sound collector 52 and collected thereby. The sound collector 52 has at least a microphone (not shown) for converting sound into electric signals (sound information), generates sound information based on the electric signal converted by the microphone and outputs the generated sound information to the controller 18.

This sound information includes information indicating at least one of the loudness, sound pitch, tone and frequency of the sound given off by the electrical discharge machining. In other words, the sound collector 52 includes a sound analyzer (not shown), which analyzes at least one of the loudness, sound pitch, tone and frequency of the sound generated by the electrical discharge machining, based on the electric signal converted by the microphone to generate sound information.

Next, the arrangement of the sound collector 52 will be described with reference to FIG. 3. The sound collector 52 is arranged in the work tank 42 as shown in FIG. 3. In the work tank 42, a space forming portion 56 defining a space 57 in which the sound collector 52 is disposed is formed. The space forming portion 56 is provided in the work tank 42 so as to be in contact with the working fluid LQ stored in the work tank 42. That is, part or whole of the space forming portion 56 is immersed in the working fluid LQ stored in the work tank 42. The space forming section 56 protects against or block out the working fluid LQ so that the working fluid LQ stored in the work tank 42 does not enter the space 57. That is, the space forming portion 56 partitions the work tank 42 into the space with the working fluid LQ stored therein and the space 57 into which the working fluid LQ does not intrude (the working fluid LQ is not stored).

A large discharge noise is generated by electrical discharge machining, so that the discharge noise is superimposed on the sound information collected by the sound collector 52. To deal with this, it is possible to reduce the influence of the discharge noise by forming the space forming portion 56 with a conductive material. That is, formation of the space forming portion 56 with a conductive material makes it possible to reduce the discharge noise included in the sound information collected by the sound collector 52 and improve the S/N ratio.

The sound collector 52 is provided adjacent to the outer wall 56a of the space forming portion 56. Accordingly, the sound generated by electrical discharge machining is transmitted through the working fluid LQ and the outer wall 56a of the space forming portion 56 and collected by the sound collector 52. Therefore, the sound collector 52 can efficiently collect the sound generated by electrical discharge machining. Conversely, when the sound collector 52 is not provided adjacent to the outer wall 56a of the space forming portion 56, the sound given off by electrical discharge machining is transmitted through the working fluid LQ and the space forming portion 56 and then collected by the sound collector 52 via air (the air or other gas), so that the sound cannot be collected efficiently. Here, a reference numeral 58 shown in FIG. 3 represents a table for supporting the workpiece W.

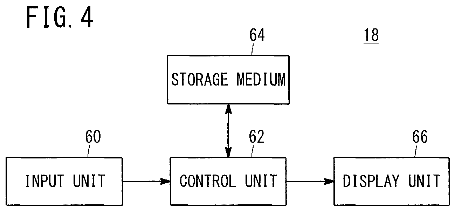

Next, the configuration of the controller 18 will be described briefly with reference to FIG. 4. The controller 18 includes an input unit 60, a control unit 62, a storage medium 64 and a display unit 66. The input unit 60 is an operation unit operated by an operator to input information, commands and others. The input unit 60 includes ten keys for inputting numeric data, various function keys (e.g., a power button, etc.), a keyboard, a touch panel and the like. The control unit 62 includes a processor such as a CPU and a memory chip storing a program. This processor, when running this program, provides the function of the control unit 62 of the present embodiment.

The storage medium 64 stores data and the like necessary for control by the control unit 62 and also functions as a buffer memory. The storage medium 64 has stored predetermined reference sound information. The display unit 66 is constituted of a liquid crystal display, organic EL display or the like, and displays necessary information and others. The touch panel of the input unit 60 is provided over the display screen of the display unit 66.

The control unit 62 performs predetermined operations based on the sound information collected by the sound collector 52. More specifically, the control unit 62 compares the reference sound information stored in the storage medium 64 with the sound information collected by the sound collector 52. When the difference falls within a predetermined range, the control unit 62 performs at least one of warning, stopping electrical discharge machining and modifying machining conditions.

When giving a warning, the control unit 62 may warn the operator by displaying the type of warning on the display unit 66 or warn the operator by outputting a sound indicating the type of warning from an unillustrated speaker. Further, when the processing conditions are modified, the control unit 62 performs electrical discharge machining under the modified machining conditions.

When a part forming the wire electrical discharge machine 10 has broken, the sound generated by the electrical discharge machining will change. For example, when a fan motor or a pump (not shown) fails, the rotation rate does not change, but abnormal noise is caused. Therefore, storing the reference sound information on each component in accordance with each component failure in the storage medium 64 enables the control unit 62 to determine (detect) the fault location or failure component. When the difference between the sound information collected by the sound collector 52 and the reference sound information is within a predetermined range, the control unit 62 determines that the component stored in association with the reference sound information has failed and issues a warning. At this stage, the control unit 62 may stop electrical discharge machining.

Further, in the electrical discharge machining on the workpiece W, it is a common practice to make cores drop away. Conventionally, when performing a cutting-off process, the operator stops electrical discharge machining at appropriate timing by monitoring the change in sound generated by electrical discharge machining and/or the machining state. In order to automatically stop electrical discharge machining, reference sound information corresponding to the finish of the core cutoff process is stored in the storage medium 64 in association with the completion of the core cutoff process. This makes it possible for the control unit 62 to determine (detect) whether or not a core cutoff process has been completed. When the difference between the sound information collected by the sound collector 52 and the reference sound information is within a predetermined range, the control unit 62 determines that the cutting process of the core is completed and stops electrical discharge machining.

Further, when the clearance between the upper wire guide 32 that ejects the working fluid LQ and the workpiece W is narrow, the table 58 and other constituents of the wire electrical discharge machine 10 may vibrate due to the flushing pressure of the working fluid LQ, causing so-called chattering. This chartering also produces sound. Since this chatter may occur only at a specific position due to distortion of the workpiece W etc., or may arise at different positions depending on each individual workpiece W, it is difficult to prevent. Therefore, by storing the reference sound information corresponding to chattering in the storage medium 64 in association with chatter, the control unit 62 can determine (detect) whether or not chatter is occurring. When the difference between the sound information collected by the sound collector 52 and the reference sound information is within a predetermined range, the control unit 62 determines that chatter occurs and stops electrical discharge machining, or modifies the machining condition. As a modification of the machining condition, for example, the pressure of the working fluid LQ ejected by the upper wire guide 32 may be changed. In addition, when disconnection of the wire electrode 12 occurs due to the change in the pressure of the working liquid LQ, the rest time of the discharge pulse may be changed.

In this manner, storing the reference sound information corresponding to the failure of each component, the reference sound information when a core cutting-out process is completed, the reference sound information when chatter occurs and the like in the storage medium 64 makes it possible to detect which part has failed, whether the core cutting process is completed or whether chatter occurs.

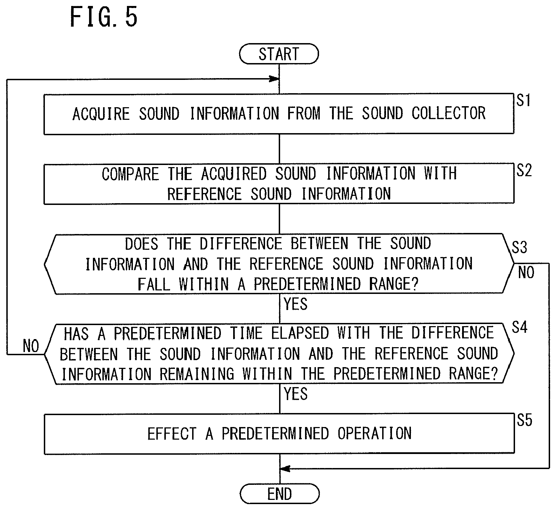

Next, the operation control of the controller 18 will be described with reference to the flowchart shown in FIG. 5. The controller 18 executes the operation control shown in FIG. 5 at intervals of a predetermined period. At step S1, the controller 18 acquires the sound information collected by the sound collector 52. Next, at step S2 the controller 18 compares the sound information acquired at step S1 with the reference sound information stored in the storage medium 64. At this time, when multiple pieces of reference sound information are stored in the storage medium 64, comparison is made with each of the multiple pieces of reference sound information.

Next, at step S3 the controller 18 determines whether the difference between the sound information acquired at step S1 and the reference sound information falls within a predetermined range. When multiple pieces of reference sound information are stored in the storage medium 64, it is determined whether or not the difference between the acquired sound information and each of the multiple pieces of reference sound information is within a predetermined range.

If it is determined at step S3 that the difference between the sound information and the reference sound information is within the predetermined range, the control proceeds to step S4, where the controller 18 determines whether or not a predetermined time has elapsed in a state in which the difference between the sound information and the reference sound information remains within the predetermined range. The controller 18 has a clock function of clocking the time and determines whether or not a predetermined time has elapsed based on this clock function.

If it is determined at step S4 that the predetermined time has not passed while the difference between the sound information and the reference sound information is within the predetermined range, the control returns to step S1 and the above-described operation is repeated. On the other hand, if it is determined at step S4 that the predetermined time has elapsed in a state in which the difference between the sound information and the reference sound information remains within the predetermined range, the control proceeds to step S5.

At step S5, the controller 18 performs a predetermined operation. The controller 18 performs an operation corresponding to the reference sound information based on which the difference of the sound information was determined to be within the predetermined range, and ends this operation control. Also, if it is determined at step S3 that the difference between the sound information and the reference sound information is not within the predetermined range, this operation control is ended.

As an operation corresponding to the reference sound information based on which the difference of the sound information was determined to be within the predetermined range, if, for example, the reference sound information corresponds to a failure of a component, the controller 18 warns that the component has failed. At this time, the control unit 62 may stop electrical discharge machining.

When the reference sound information based on which the difference of the sound information was determined to be within the predetermined range corresponds to the completion of a core cutting process, the controller 18 stops electrical discharge machining. At this time, the controller 18 may notify the operator that cutting of the core is completed and electrical discharge machining is stopped. The notice of the finish of core cutting and stoppage of electrical discharge machining may be given to the operator by displaying a necessary message on the display unit 66 or by outputting a sound indication from the aforementioned speaker.

When the reference sound information based on which the difference of the sound information was determined to be within the predetermined range corresponds to chattering, the controller 18 stops electrical discharge machining or changes the machining condition. At this time, the controller 18 may inform the operator that discharge machining is stopped due to the occurrence of chatter or that the machining condition has been changed due to the occurrence of chatter. This notice may be given to the operator by displaying a necessary message on the display unit 66 or by outputting a sound indication from the aforementioned speaker.

### [Variations]

The above embodiment may be modified as follows.

### (Variational Example 1)

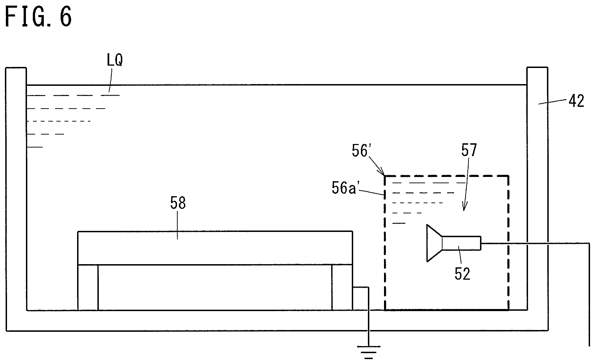

FIG. 6 is an illustrative diagram for explaining an arrangement of the sound collector 52 in a variational example 1. In the variational example 1, a space forming portion 56' made of mesh is used instead of the space forming portion 56. That is, the space forming portion 56' with an outer wall 56a' formed of mesh is used. In this case, the working fluid LQ stored in the work tank 42 passes through the space forming portion 56' and enters an interior space 57. Therefore, when the mesh-formed space forming portion 56' is used, it is not necessary to arrange the sound collector 52 adjacent to the outer wall 56a' of the space forming portion 56', but the sound collector 52 (at least the microphone) needs to be immersed in the working fluid LQ. This enables the sound collector 52 to directly collect the sound generated by electrical discharge machining via the working fluid LQ, so that the sound arising from electrical discharge machining can be collected more exactly.

When the space forming portion 56' is formed of a conductive material in order to reduce the influence of the discharge noise, it is necessary to make the mesh finer. Specifically, it is preferable to use a mesh size (openings) that can readily introduce the working fluid LQ into the space 57 and can eliminate the discharge noise to a predetermined level or lower.

### (Variational Example 2)

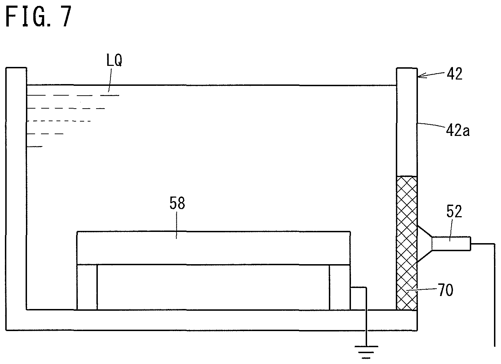

FIG. 7 is an illustrative diagram for explaining an arrangement of the sound collector 52 in a variational example 2. In the variational example 2, the sound collector 52 is provided outside the work tank 42. The sound collector 52 is arranged outside an outer wall 42a of the work tank 42 and adjacent to the outer wall 42a. Therefore, the sound generated by electrical discharge machining is transmitted through the working fluid LQ and the outer wall 42a of the work tank 42 and collected by the sound collector 52. Therefore, the sound collector 52 can efficiently collect the sound generated by electrical discharge machining.

In addition, at least the portion of the outer wall 42a of the work tank 42 where the sound collector 52 is disposed is formed of a sound permeable material 70 that can transmit sound. That is, the sound collector 52 is arranged adjacent to the outer wall 42a of the work tank 42 formed of the sound permeable material 70. Thereby, the sound collector 52 can efficiently collect the sound generated by electrical discharge machining. As the sound permeable material 70, a material that is light in weight and has strength and corrosion resistance is preferable. For example, a metal having a small specific weight such as aluminum, titanium or an iron-based material containing SUS, a resin or the like is suitable. In FIG. 7, the portion formed by the sound permeable material 70 is depicted by hatching.

Similarly, in the above-described embodiment, at least the portion where the sound collector 52 is arranged adjacently, of the outer wall 56a of the space forming portion 56 may be formed of the sound permeable material 70 that can transmit sound.

### (Variational Example 3)

Though in the above-described embodiment, reference sound information is stored in the storage medium 64, sound-range information that indicates a sound range is stored in a variational example 3. The storage medium 64 may store, at least, one of the range information corresponding to each component failure, the range information when a core cutting process has been completed and the range information when chatter occurs. In this case, the control unit 62 determines whether or not the sound information acquired from the sound collector 52 falls within the range indicated by the range information stored in the storage medium 64. Then, when determining that the acquired sound information falls within the range indicated by the range information, the control unit 62 performs an operation (at least one of operations including warning, stoppage of discharge machining and change of machining condition) corresponding to the range information in which the acquired sound information was determined to fall.

### (Variational Example 4)

Though, in the above embodiment and examples, an item of reference sound information corresponding to each component failure and an item of reference sound information corresponding to chattering are stored in the storage medium 64, in variation example 4 sound arising from electrical discharge machining in normal operation when neither component failure nor chartering is occurring is stored as reference sound information. In this case, the control unit 62 compares the sound information acquired from the sound collector 52 with the reference sound information stored in the storage medium 64, determines that an abnormality is occurring when the difference therebetween falls beyond a predetermined range and performs, at least, one of operations including warning, stoppage of discharge machining and change of machining condition.

It should be noted that the storage medium 64 may store range information representing a range of sound arising from electrical discharge machining at the time of normal operation in which neither component failure nor chattering is occurring. In this case, the control unit 62 determines whether or not the sound information acquired from the sound collector 52 falls within the range indicated by the range information stored in the storage medium 64. Then, when determining that the acquired sound information falls beyond the range indicated by the range information, the control unit 62 determines that an abnormality is occurring, and performs, at least, one of operations including warning, stoppage of discharge machining and change of machining condition.

### (Variational Example 5)

The above variational examples 1 to 4 may be combined as appropriate as long as no contradiction arises.

As described above, an electrical discharge machine 10 described in the above embodiment and variational examples 1 to 5 includes: a work tank 42 configured to store a working fluid LQ for performing electrical discharge machining; a sound collector 52 configured to collect sound transmitted through the working fluid LQ stored in the work tank 42; and a controller 18 configured to perform a predetermined operation based on the sound information collected by the sound collector 52.

In this way, since the sound generated by electrical discharge machining is collected via the working fluid LQ, it is possible to correctly grasp the state of the electrical discharge machine 10 and automatically perform a suitable operation in conformity with the state of the electrical discharge machine 10.

The sound collector 52 is arranged inside the work tank 42 while a space forming portion 56 (or 56') for defining a space 57 accommodating the sound collector 52 is further provided inside the work tank 42 so as to be in contact with the working fluid LQ stored in the work tank 42. In this way, the space forming portion 56 (or 56') for defining the space 57 accommodating the sound collector 52 is in contact with the working liquid LQ, so that the sound collector 52 can efficiently collect the sound generated by electrical discharge machining.

Since the space forming portion 56 (or 56') is formed of conductive material, it is possible to reduce the influence on the sound information from the discharge noise arising from electrical discharge machining, hence improve the S/N ratio of the sound information.

Since the space forming portion 56 protects against the working fluid LQ stored in the work tank 42 so that the fluid LQ will not enter the space 57, there is no need to make the sound collector 52 waterproof, which leads to reduction in cost. In addition, since the sound collector 52 is arranged adjacent to an outer wall 56a of the space forming portion 56 that is in contact with the working fluid LQ, the sound collector 52 can collect the sound generated by electrical discharge machining in a more efficient manner.

Since the space forming portion 56' is formed of mesh so as to introduce the working fluid LQ stored in the work tank 42 into the space 57, the sound collector 52 can collect the sound generated by electrical discharge machining, directly via the working fluid LQ, in a more exact and efficient manner.

Since the sound collector 52 is arranged outside an outer wall 42a of the work tank 42 and adjacent thereto, the sound collector 52 can collect the sound generated by electrical discharge machining in a more efficient manner.

Since the outer wall 56a (or 42a) around which the sound collector 52 is arranged adjacently is formed with a sound permeable material 70 that can transmit sound, it is possible to collect the sound generated by electrical discharge machining in a more efficient manner.

The controller 18 includes a storage medium 64 that has stored predetermined reference sound information. The controller 18 compares the sound information collected by the sound collector 52 with the reference sound information stored in the storage medium 64, and based on the comparison result, performs at least one of operations including warning, stoppage of electrical discharge machining and change of machining condition. Thus, use of the reference sound information stored in the storage medium 64 enables more exact grasp of the current state of the electrical discharge machine 10, whereby it is possible to automatically perform a suitable operation in conformity with the current state.

The controller 18 includes a storage medium 64 that has stored range information indicating a predetermined range of sound information. The controller 18 determines whether or not the sound information collected by the sound collector 52 falls within the range indicated by the range information stored in the storage medium 64, and based on the determination result, performs at least one of operations including warning, stoppage of electrical discharge machining and change of machining condition. Thus, use of the range information stored in the storage medium 64 enables more exact grasp of the current state of the electrical discharge machine 10, whereby it is possible to automatically perform a suitable operation in conformity with the current state.

The reference sound information or range information corresponding to a failure component may be stored in the storage medium 64. In this case, the controller 18 detects a component that has failed based on the sound information collected by the sound collector 52 and the reference sound information or the range information, and when a malfunction of a component is detected, the controller, at least, gives warning that the detected component has a failure. In this way, it is possible to accurately detect a failure part in the electrical discharge machine 10 and automatically perform a suitable operation (warning to the operator) accordingly.

The reference sound information or range information corresponding to completion of a core cutting process may be stored in the storage medium 64. In this case, the controller 18 determines whether or not a core cutting process has been completed based on the sound information collected by the sound collector 52 and the reference sound information or the range information. When the core-cutting is completed, the controller, at least, stops electrical discharge machining. As a result, it is possible to accurately detect whether the core cutting-out process has been completed, and automatically perform an appropriate operation (stoppage of electric discharge machining) accordingly.

The reference sound information or range information corresponding to chattering may be stored in the storage medium 64. In this case, the controller 18 determines whether or not chatter occurs based on the sound information collected by the sound collector 52 and the reference sound information or the range information. When chatter occurs, the controller, at least, performs stoppage of electrical discharge machining or change of machining condition. With this, it is possible to accurately detect occurrence of chattering, and automatically perform a suitable operation (stoppage of electrical discharge machining or change of machining condition) accordingly.

Note that the sound information collected by the sound collector 52 includes information representing at least one of the loudness, sound pitch, tone and frequency of the sound.

## Claims

1. An electrical discharge machine (10) that performs electrical discharge machining on a workpiece (W) by applying voltage between an electrode gap formed between an electrode (12) and the workpiece (W) to generate electric discharge in a working fluid (LQ), comprising:
a work tank (42) configured to store the working fluid (LQ) in order to perform electrical discharge machining;
a sound collector (52) configured to collect sound generated by electrical discharge machining and transmitted through the working fluid (LQ) stored in the work tank (42); and
a controller (18) configured to perform a predetermined operation based on sound information collected by the sound collector (52).

2. The electrical discharge machine (10) according to claim 1, wherein:
the sound collector (52) is arranged inside the work tank (42); and
a space forming portion (56, 56') configured to define a space (57) accommodating the sound collector (52) is further provided inside the work tank (42) so as to be in contact with the working fluid (LQ) stored in the work tank (42).

3. The electrical discharge machine (10) according to claim 2, wherein the space forming portion (56, 56') is formed of conductive material.

4. The electrical discharge machine (10) according to claim 2 or 3, wherein:
the space forming portion (56) is configured to protect against the working fluid (LQ) stored in the work tank (42) so that the fluid (LQ) does not enter the space (57); and
the sound collector (52) is arranged adjacent to an outer wall (56a) of the space forming portion (56) that is in contact with the working fluid (LQ).

5. The electrical discharge machine (10) according to claim 2 or 3, wherein the space forming portion (56') is formed of mesh so as to introduce the working fluid (LQ) stored in the work tank (42) into the space (57).

6. The electrical discharge machine (10) according to claim 1, wherein the sound collector (52) is arranged outside an outer wall (42a) of the work tank (42) and adjacent thereto.

7. The electrical discharge machine (10) according to claim 4 or 6, wherein the outer wall (56a, 42a) around which the sound collector (52) is arranged adjacently is formed with a sound permeable material (70) that is capable of transmitting sound.

8. The electrical discharge machine (10) according to any one of claims 1 to 7, wherein:
the controller (18) includes a storage medium (64) that has stored predetermined reference sound information; and
the controller (18) is configured to compare the sound information collected by the sound collector (52) with the reference sound information stored in the storage medium (64), and based on a comparison result, perform at least one of operations including warning, stoppage of electrical discharge machining and change of machining condition.

9. The electrical discharge machine (10) according to any one of claims 1 to 7, wherein:
the controller (18) includes a storage medium (64) that has stored range information indicating a predetermined range of sound information; and
the controller (18) is configured to determine whether or not the sound information collected by the sound collector (52) falls within the range indicated by the range information stored in the storage medium (64), and based on a determination result, perform at least one of operations including warning, stoppage of electrical discharge machining and change of machining condition.

10. The electrical discharge machine (10) according to claim 8 or 9, wherein:
the reference sound information or the range information corresponding to a failure component has been stored in the storage medium (64); and
the controller (18) is configured to detect a component that has failed based on the sound information collected by the sound collector (52) and the reference sound information or the range information, and when a failure of a component is detected, the controller (18) is configured to at least give warning that the detected component has the failure.

11. The electrical discharge machine (10) according to claim 8 or 9, wherein:
the reference sound information or the range information corresponding to completion of a core cutting process has been stored in the storage medium (64); and
the controller (18) is configured to determine whether or not a core cutting process has been completed based on the sound information collected by the sound collector (52) and the reference sound information or the range information, and, when the core-cutting is completed, the controller (18) is configured to at least stop electrical discharge machining.

12. The electrical discharge machine (10) according to claim 8 or 9, wherein:
the reference sound information or the range information corresponding to chattering has been stored in the storage medium (64); and
the controller (18) is configured to determine whether or not chatter occurs based on the sound information collected by the sound collector (52) and the reference sound information or the range information, and, when chatter occurs, the controller (18) is configured to at least perform stoppage of electrical discharge machining or change of machining condition.

13. The electrical discharge machine (10) according to any one of claims 1 to 12, wherein the sound information includes information representing at least one of loudness, sound pitch, tone and frequency of the sound.
